# EUROPÄISCHE PATENTSCHRIFT

(11) **EP 2 285 680 B1**
(45) Veröffentlichungstag und Bekanntmachung des Hinweises auf die Patenterteilung: **31.07.2013**
(21) Anmeldenummer: 09757542.7
(22) Anmeldetag: 03.06.2009
(51) Int. Cl.: B64D 13/00

(54) **LUFTEINLASSVENTIL FÜR EIN FLUGZEUG UND HERSTELLUNGSVERFAHREN FÜR EIN LUFTEINLASSVENTIL**
AIR INLET VALVE FOR AN AIRPLANE AND MANUFACTURING METHOD FOR AN AIR INLET VALVE
VANNE D'ADMISSION D'AIR POUR AERONEF ET PROCEDE DE FABRICATION D'UNE VANNE D'ADMISSION D'AIR

(30) Priorität: 04.06.2008 DE 102008002205; 04.06.2008 US 130884
(43) Veröffentlichungstag der Anmeldung: 23.02.2011
(73) Patentinhaber: Airbus Operations GmbH, 21129 Hamburg (DE)
(72) Erfinder: SCHIEK, Thorsten, 22765 Hamburg (DE); PETRAC, Markus, 21717 Deinste (DE); SCHERER, Thomas, 22559 Hamburg (DE)
(74) Vertreter: Isarpatent
(86) Internationale Anmeldenummer: PCT/EP2009/056782
(87) Internationale Veröffentlichungsnummer: WO 2009/147161

(56) Entgegenhaltungen:
- EP-A- 0 342 069
- EP-A2- 0 997 376
- DE-A1- 10 145 687
- DE-A1- 10 216 969
- NATIONAL ADVISORY COMMITTEE FOR AERONAUTICS: "An experimental investigation of NACA submerged-duct entrances"[Online] 13. November 1945 (1945-11-13), XP002545086 Washington Gefunden im Internet: URL:http://naca.central.cranfield.ac.uk/re ports/1945/naca-acr-5i20.pdf> [gefunden am 2009-09-04]

## Beschreibung

Die Erfindung bezieht sich auf ein strömungsoptimiertes Lufteinlassventil für ein Flugzeug gemäß dem Oberbegriff des Anspruchs 1 sowie auf ein Herstellungsverfahren für ein solches Lufteinlassventil gemäß dem Oberbegriff des Anspruchs 15. Mit ihr wird ein strömungsoptimiertes Lufteinlassventil, das im Bereich eines Senklufteinlasses positioniert ist, vorgestellt, welches unter dem Einfluss der auf sich luftdrucklastig einwirkenden Kräfteverhältnisse selbstregelnd beschaffen ist. Durch seinen Einsatz wird eine den aerodynamischen Strömungsverhältnissen angepasste Optimierung der in den Senklufteinlass einströmenden Luft während eines stattfindenden Luftdruckausgleiches zwischen der Flugzeugaußenumgebung und dem Rumpfinneren des Flugzeugrumpfes umgesetzt.

Ein herkömmlicher Flugzeugrumpf ist Konstruktiv als Druckrumpf ausgelegt. Dabei muss der statische Luftdruck im Rumpfinneren größer als der Luftdruck, der außerhalb der Flugzeug-umgebung herrscht, sein. Aus Sicherheitsgründen werden in die Flugzeugaußenhaut autark arbeitende Luftventile eingebaut, die in der (angenommenen) Situation einer auftretenden inversen Druckdifferenz zwischen dem druckbelüfteten Rumpfinnenbereich (Kabinen- und Frachtraumbereich) und dem von einem atmosphärischen Umgebungsdruck belasteten Rumpfaußenbereich einen Druckausgleich schaffen. Im angenommenen Fall, dass der atmosphärische Umgebungsluftdruck (Außenluftdruck) größer dem Luftdruck im Rumpfinneren (Innenluftdruck) ist, wird ein in der Rumpfaußenhaut installiertes Lufteinlassventil (bzw. sogenanntes Außenhautventil) aktiv tätig.

Dokument DE 10216969, das als nächstliegendes Stand der Technik orgesehen wird, offenbart ein solches Lufteinlass ventil.

Derartig bekannte Luftdruck-Ausgleichsventile funktionieren derart, wonach man (zunächst) bei der Überschreitung von einem gewissen invers wirkenden Differenzdruck beobachten wird, dass die (resultierende) Kraft aus einem statischen Außenluftdruck, der außerhalb des Flugzeugrumpfes auf einem Ventildeckel lastet, größer einer (sogenannten) Zuhaltekraft (Druckkraft) von Federn, die innerhalb der Flugzeughaut positioniert sind, welche randseitlich und lotrecht gegen eine Platte drücken, ist. Infolge dessen öffnet sich das Ventil und ein Luftstrom strömt von der Flugzeugrumpf-Außenumgebung dem Rumpfinnenbereich zu und sorgt für einen Luftdruckausgleich. Die Einströmung dieser Luft wird über keinerlei Maßnahmen gerichtet optimiert. Auf Lösungen herkömmlicher Bauart, die sich auf ein (den Flugzeugtypen: "Boeing" installiertes) Lufteinlassventil und ein (den Flugzeugtypen: "Airbus" installiertes) Luftdruck-Ausgleichsventil beziehen, deren Installation zum Ausgleich von auftretenden inversen Druckdifferenzen zwischen dem druckbelüfteten Rumpfbereich und dem von einem atmosphärischen Umgebungsdruck belasteten Rumpfaußenbereich geschieht, welche im Bereich von der Flugzeughaut integrierten Lufteinlässen angeordnet sind, wird später im Ausführungsteil näher eingegangen, um der Fachwelt den Vergleich mit einem näher beschriebenen strömungsoptimierten Lufteinlassventil zu erleichtern. Mit derartigen Ventilen werden bekanntermaßen die Produkte: "Airbus A330 / A340" und "Boeing 737" ausgerüstet.

Dabei ist es von Nachteil, dass der tatsächliche Luftstrom, der unter inversen Druckbedingungen über diese genannten Ventile in den Flugzeugrumpf eintritt, (durch die Art der Ventile) stark von der (den Flugzeugrumpf umgebenden) äußeren Luftströmung beeinflusst wird und somit quasi nicht ohne aufwendige Testreihen im Flugzeug bestimmt werden kann.

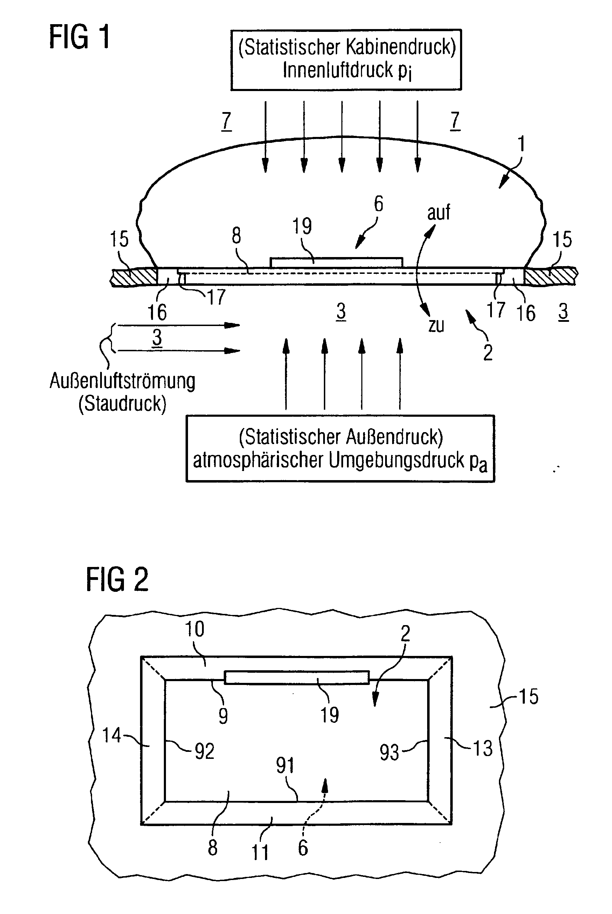

In der Fig. 1 ist ein herkömmliches (und in einer Seitenansicht dargestelltes) strömungsoptimiertes Lufteinlassventil 2 dargestellt. Es ist im Bereich eines Senklufteinlasses 1 angeordnet, welches sich in einer den Öffnungsbereich 6 des Senklufteinlasses 1 verschließenden Lage befindet. Es besteht aus einem Seitenrahmen 16, der seitwärts anliegend dem Senklufteinlass-Wandungsbereich angeordnet ist und zumindest eingangs des Senklufteinlasses 1 den Querschnitt des Öffnungsbereiches 6 überdeckt. Dieser Seitenrahmen 16 wird einem (oberhalb des Öffnungsbereiches 6) freigehaltenen Querschnitt der Rumpfaußenhaut 15 des Flugzeuges eingepasst und an der Rumpfaußenhaut 15 befestigt. Der Seitenrahmen 16 besteht aus flachen Blechplatten-Elementen oder flachen Trägern (Planken-Elementen), die nachfolgend mit Quer- und Längsseiten 10, 11, 13, 14 bezeichnet werden. Dieser Seitenrahmen 16 umfasst zwei Quer- und zwei Längsseiten 10, 11, 13, 14, deren Seitenenden miteinander mechanisch verbunden sind und einen (nach der Fig. 2) rechteckförmigen Seitenrahmen 16 bilden.

Am Beginn der einsetzenden Abschrägung der Bodenfläche des Senklufteinlasses 1 wird eine zum Rumpfinnenbereich 7 (Öffnungsausgang des Senklufteinlasses 1) neigbare (drehbeweglich gelagerte) Klappe 8 gelagert, die an wenigstens einem rahmenbefestigten Federscharnier 19 drehbeweglich befestigt ist. Die Klappenbewegung wird in der Fig. 1 mit einer Pfeilkennzeichnung "auf / zu" hervorgehoben. Die Klappe 8 liegt einer rahmeninnen-seitig angeordneten und rahmenumfänglich platzierten nutenartigen Aussparung auf, wobei ein dieser Aussparung platzierter streifenartiger Dichtungsansatz 17 (Dichtstreifen) den Klappenrand der Klappe 8 gegen den Seitenrahmen 16 (in dieser Situation) gasundurchlässig dichtet, sofern die Klappe 8 - bei einem Luftdruckverhältnis, wenn der Innenluftdruck pᵢ größer oder gleich dem atmosphärischen Außenluftdruck pₐ ist, worauf nachfolgend noch näher eingegangen wird, - der nutenartigen Rahmenaussparung anliegt und gegen den Dichtungsansatz 17 drückt.

Ferner wird die Klappe 8 anderenfalls - bei einem gegenüber dem Umgebungsluftdruck pₐ bestehenden Rumpfluftunterdruck, wenn der Innenluftdruck pᵢ kleiner dem Umgebungsluftdruck pₐ ist, - den Öffnungsbereich 6 des Senklufteinlasses 1 (von der zum Rumpfinnenbereich 7 dann geneigten Klappe 8) luftströmungsdurchlässig freigegeben. Ergänzend wird bemerkt, das der Innenluftdruck pᵢ ein statischer Kabinendruck und der atmosphärischen Umgebungsluftdruck pₐ ein statischer Außendruck der (im Bereich des Senklufteinlasses 1 auf den Flugzeugrumpf lastenden Rumpfaußenluft) ist. Sofern die Klappe 8 sich in einem geöffneten Zustand befindet, wird ein Teil der Außenluftströmung (aufgrund der Form und Anordnung des Senklufteinlasses 1) in den Öffnungsbereich 6 einströmen. Zudem wird noch auf die Fig. 2 hingewiesen, welche die Draufsicht der Ventilanordnung nach Fig. 1 zeigt.

Demzufolge liegt der Erfindung die Aufgabe zugrunde, eine Lösung für ein strömungsoptimiertes Lufteinlassventil eines Flugzeuges bereitzustellen, das im Bereich eines Senklufteinlasses, mit dem das Flugzeug zum Ausgleich von invers wirkenden Differenzluftdrücken ausgestattet ist, angeordnet ist. Das Lufteinlassventil soll unter dem Einfluss der auf sich luftdrucklastig einwirkenden Kräfteverhältnisse einen selbst regelnden, freien Lufteintritt in den Flugzeugrumpf-Innenbereich gewährleisten, wobei gleichermaßen eine den aerodynamischen Strömungsverhältnissen angepasste Optimierung der in den Senklufteinlass einströmenden Luft während eines stattfindenden Luftdruckausgleiches zwischen der Flugzeugaußenumgebung und dem Rumpfinneren des Flugzeugrumpfes umgesetzt wird.

Diese Aufgabe wird durch ein Lufteinlassventil mit den Merkmalen des Anspruchs 1 und/oder durch ein Verfahren mit den Merkmalen des Anspruchs 15 gelöst. In den weiteren Ansprüchen sind zweckmäßige Weiterbildungen und Ausgestaltungen dieser Maßnahmen angegeben.

Die Erfindung wird im Folgenden anhand von Ausführungsbeispielen unter Bezugnahme auf die beiliegenden Figuren näher erläutert.

Von den Figuren zeigen:
- Fig. 1: die Seitenansicht eines herkömmlichen Lufteinlassventiles im geschlossenen Zustand, mit dem der Flugzeugtyp: "Boeing 737" ausgerüstet ist;
- Fig. 2: die Draufsicht des Lufteinlassventiles nach der Fig. 1;
- Fig. 3: die Seitenansicht eines erfindungsgemäßen Luftdruck-Ausgleichventils;
- Fig. 4: die Draufsicht des erfindungsgemäßen Luftdruck-Ausgleichventils nach der Fig. 3;
- Fig. 5: ein im geschlossenen Zustand positioniertes Lufteinlassventil im Bereich eines NACA-Senklufteinlasses gemäß der Erfindung;
- Fig. 6: die Darstellung der Bildung von Kantenwirbeln an den Ausschnittskanten des Öffnungsquerschnittes des luftaufnehmenden (druckausgleichenden) NACA-Senklufteinlasses nach der Fig. 5;
- Fig. 7: die Darstellung der Verstärkung der Kantenwirbel an den Ausschnittskanten des Öffnungsquerschnittes des NACA-Senklufteinlasses und an den Klappenkanten einer ventilintegrierten Klappe nach Fig. 6;
- Fig. 8: ein strömungsoptimiertes, selbstregelnd arbeitendes Lufteinlassventil, welches den Öffnungsbereich des NACA-Senklufteinlasses nach der Fig. 5 plan liegend zur Oberfläche der Flugzeug-Außenhaut verschließt;
- Fig. 9: die Seitenansicht des Lufteinlassventiles nach Fig. 8 in geöffneter Position;
- Fig. 10: die Seitenansicht des Lufteinlassventiles nach Fig. 8 in geschlossener Position;
- Fig. 11: das Lufteinlassventil nach der Fig. 8 mit deutlich hervorgehobenen Ventilbestandteilen;
- Fig. 12: die Draufsicht des Lufteinlassventiles nach der Fig. 8 ohne Darstellung von randseitlich dem NACA-Öffnungsbereich installierten Wandbegrenzungen;
- Fig. 13: das Lufteinlassventil nach der Fig. 12 mit Darstellung von (in Richtung des NACA-Öffnungsbereiches lotrecht) installierten Wandbegrenzungen;
- Fig. 14: einen kompletten NACA-Senkllufteinlass, dem ein strömungsoptimiertes Lufteinlassventil installiert ist;
- Fig. 15: die Seitenansicht des Lufteinlassventils nach der Fig. 9 mit zusätzlich (an dessen Staukante) installierter Nebenklappe;
- Fig. 16: die Seitenansicht des Lufteinlassventils nach der Fig. 10 mit zusätzlich (an dessen Staukante) installierter Nebenklappe; und
- Fig. 17: ein schematisches Ablaufdiagramm eines Ausführungsdiagramm eines Ausführungsbeispiels des erfindungsgemäßen Verfahrens.

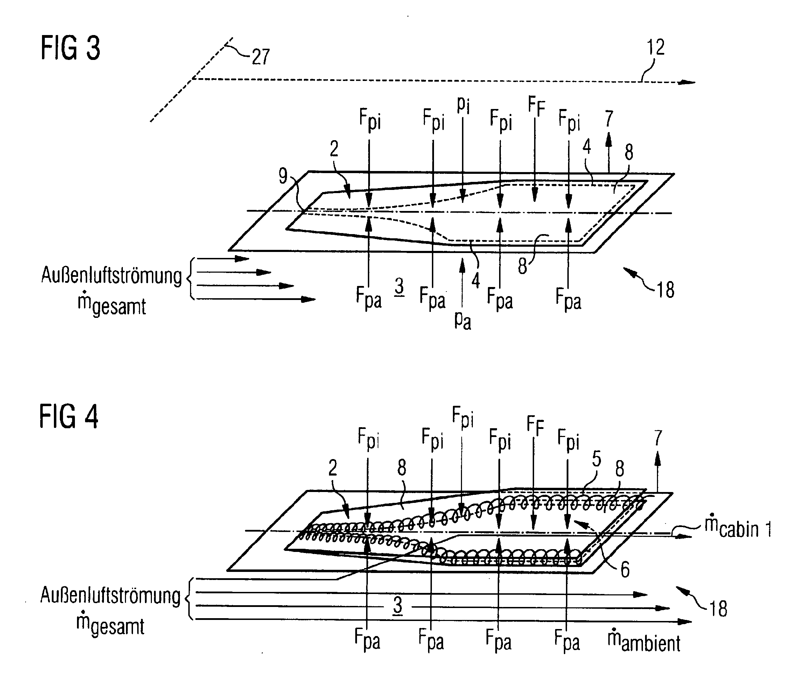

Die Figuren 3 bis 5 zeigen ein im Bereich einen Senklufteinlasses 1 positioniertes Ausführungsbeispiel eines erfindungsgemäßen Lufteinlassventils 2, das - aufgrund der Wirbel(paar)bildung - vorteilhafterweise in einem NACA-Senklufteinlass 18 positioniert ist. Diese Entstehung von Luftwirbeln 5 resp. Luftwirbelpaaren lässt sich insbesondere bei Senklufteinlässen 1, die eine NACA-Form aufweisen, beobachten. Dabei wird man - am Beispiel der Ventilanordnung nach den Figuren 3 bis 5 - beobachten, dass sich die ursächliche Luftwirbelbildung an den Ausschnittskanten 4 des NACA-Senklufteinlasses 1 durch (gewünschte) weitere Zuführung von (außerhalb des Flugzeugrumpfes befindlicher) Umgebungsluft 3 in diesen NACA-Senklufteinlass 18 verstärkt, die sich randseitlich der Klappenkante(n) der Klappe 8 fortsetzen wird, sofern die (dem NACA-Öffnungsquerschnitt angepasste) Klappe 8 sich in einer geöffneten Position befindet.

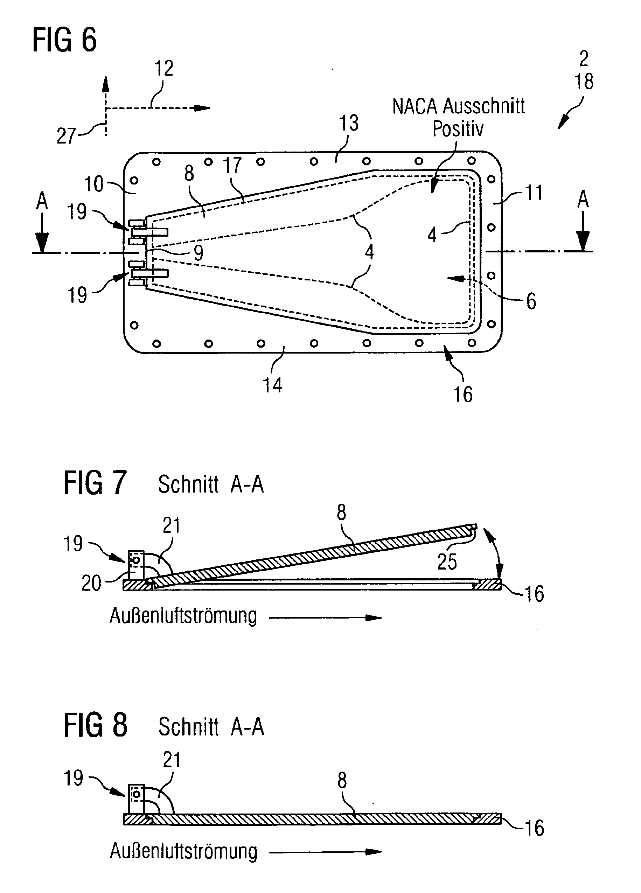

Nach der Anordnung der Fig. 3, die sich hinsichtlich den Figuren 1 und 2 insbesondere durch den Einsatz eines NACA-Senklufteinlasses 18 und der damit korrelierenden NACAangepassten Klappenflächen-Gestalt der Klappe 8 unterscheidet, befindet sich das (aufbaumäßig gleichartige) Lufteinlassventil 2 im geschlossenen Zustand, wonach die Klappe 8 eine plane Fläche mit der (nicht gezeigten) Rumpfaußenhaut 15 des Flugzeuges bildet. Die aus dem (non-invers wirkenden) Differenzluftdruck Δp [für Δp = pᵢ - pₐ, und pₐ < pᵢ (Kabinenluftüberdruck)] resultierende Kraft und die hinzuaddierte Federkraft F_{F} einer Druckfeder von (dem hinsichtlich der Fig. 1 erwähnten) Federscharnier 19, das erstmalig in Fig. 6 gezeigt wird, wirkt auf die Klappe 8 dieses Lufteinlassventils 2 und hält letztere geschlossen, wobei die Beziehung: ∑ F_{Pi} + F_{F} > ∑ F_{Pa} -> m (Punkt)_{cabin} = 0 diese Situation maßgeblich beschreibt. Danach wird keine Luftströmung der Umgebungsluft 3 (Rumpfaußenluft) von außerhalb des Flugzeugrumpfes über den NACA-Senklufteinlass 18 in Richtung der Flugzeuginnenbereiche einsetzen. Der Luftmassendurchsatz m (Punkt)_{cabin} von Rumpfaußenluft zur bspw. Flugzeugkabine ist gleich Null.

Die Anordnung der Fig. 4 zeigt im Vergleich zu der Fig. 3 eine wenig geöffnete Klappe 8 (geringfügig geneigte Klappe 8). Die aus dem (invers wirkenden) Differenzluftdruck Δp [für Δp = pᵢ - pₐ, und pₐ > pᵢ (Kabinenluftunterdruck)] resultierende Kraft und die hinzuaddierte Federkraft F_{F} der Druckfeder von (dem hinsichtlich der Fig. 1 erwähnten) Federscharnier 19 wirkt auf die Klappe 8 dieses Lufteinlassventils 2 ein und die Klappe 8 beginnt sich zu öffnen.

Die nachfolgende Beziehungen: ∑ F_{Pi} + F_{F} < ∑ F_{Pa} -> m (Punkt)_{Cabin1} ≠ 0 und m (Punkt)_{gesamt} = m (Punkt)_{cabint} + m (Punkt)_{ambient} beschreiben diese Situation maßgeblich, wobei außerdem (∑ F_{Pa} = ∑ pₐ X A_{Klappe} > ∑ F_{Pi} = ∑ pᵢ x A_{Klappe}) + F_{F} gilt. Danach wird eine Luftströmung der Umgebungsluft 3 (Rumpfaußenluft) von außerhalb des Flugzeugrumpfes über die Klappe 8 des Lufteinlassventils 1 den NACA-Senklufteinlass 18 in Richtung des Rumpfinnenbereichs 7 einsetzen, wobei nur eine Teilmenge der Umgebungsluft 3 in den NACA-Senklufteinlass 18 abgezweigt wird. An den Kanten des Öffnungsquerschnittes des NACA-Senklufteinlasses 18 werden sich Luftwirbel 5 (sogenannte Kantenwirbel) bilden, welche die Grenzschicht der Rumpfaußenluft zusätzlich absaugen und dabei helfen, die höher energetische Strömung außerhalb der Grenzschicht als Luftmassen(teil)strom in bspw. die Flugzeugkabine zu leiten.

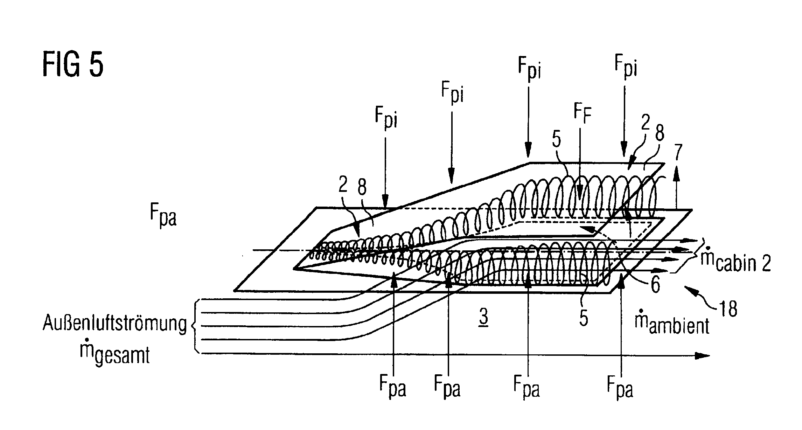

Weiter nach der Anordnung der Fig. 5, die im Vergleich der Fig. 4 eine weitaus mehr geöffnete Klappe 8 zeigt. Die aus dem (invers wirkenden) Differenzluftdruck Δp [für Δp = pᵢ - pₐ, und pₐ >> pᵢ (Kabinenluftunterdruck)] angewachsene resultierende Kraft und die hinzuaddierte Federkraft F_{F} der Druckfeder von (dem hinsichtlich der Fig. 1 erwähnten) Federscharnier 19 wirken auf die Klappe 8 dieses Lufteinlassventils 2 und die Klappe öffnet sich folglich weiter.

Die nachfolgenden Beziehungen: ∑ F_{Pi} + F_{F} << ∑ F_{Pa} -> m (Punkt)_{Cabin2} > m (Punkt)_{Cabin1} und m (Punkt)_{gesamt} = m (Punkt)_{cabint} + m (Punkt)_{cabin2} beschreiben diese Situation maßgeblich. Je größer ∑ F_{Pa} = ∑ pₐ x A_{Klappe} im Verhältnis zu ∑ F_{Pi} = ∑ pᵢ x A_{Klappe)} + F_{F} wird, desto mehr öffnet sich die Klappe 8 und lässt einen sich vergrößernden Luftstrom insbesondere in die Flugzeugkabine eintreten. Danach setzt eine verstärkte Luftströmung der Umgebungsluft 7 (Rumpfaußenluft) von außerhalb des Flugzeugrumpfes über die Klappe 8 des Lufteinlassventils 1 den NACA-Senklufteinlass 18 in Richtung der Flugzeuginnenbereiche ein. An den Kanten 4 des Öffnungsquerschnittes des NACA-Senklufteinlasses 18 bilden sich Luftwirbel 5 (sogenannte Kantenwirbel), die sich an den Klappenkanten der Klappe 8 randseitlich fortsetzen (sich gewissermaßen fortpflanzen), wodurch ein Wachstum des bspw. in die Flugzeugkabine geleiteten Luftmassenstroms eintreten wird. Die Platte 8 wirkt in dieser Situation als Wirbel- und Strömungsmultiplikator ein.

An dieser Stelle ist auf den vorteilhaften Einsatz eines NA-CA-Senklufteinlasses 18 in Kombination mit dem (in Abhängigkeit der herrschenden Luftdruckverhältnissen) selbstregelnd arbeitenden und strömungsoptimiert angepasstem Lufteinlassventil 2 hinzuweisen, wonach der (figurlich betreffende) Luftmassendurchsatz m (Punkt)_{cabin1}, m (Punkt)_{cabin2}. durch die NACA-Form bei gleicher Größe des (ausgangsseitig des NACA-Senklufteinlasses 18 befindlichen) Rumpfloches und gleichem Einbauraum (des NACA-Senklufteinlasses 18) wesentlich höher sein wird, also eine Leistungserhöhung der über den NACA-Senklufteinlass 18 geleiteten Teilluftmenge an Umgebungsluft 3 bedeuten wird. Durch diesen Leistungszuwachs kann die Anzahl der ursächlich dem Flugzeugrumpf (oder an anderen vorgesehenen aerodynamischen Außenhautbereichen des Flugzeuges) zu installierenden Lufteinlassventile 1 und somit die Anzahl der benötigten Ausschnitte oder Öffnungsbereiche in der Rumpfaußenhaut 15 verringert werden. Dadurch ergibt sich auch eine Verringerung des Flugzeuggewichtes und folglich ein niedrigerer Kraftstoffverbrauch.

Das Lufteinlassventil 2 wird vorzugsweise auf einen definierten Luftmassendurchsatz m (Punkt)_{cabin1}, m (Punkt)_{cabin2}, der von den aktuellen Flugbedingungen und den Dimensionen abhängt, eingestellt, um die erwähnten Vorteile effizient nutzbar zu machen.

In den weiteren Figuren werden nun denkbare Ausführungen vorgestellt. So beziehen sich die Figuren 6 bis 9 auf die Installation eines (strömungsoptimierten) Lufteinlassventils 2, dessen definierte Anordnung im Bereich eines NACA-Senklufteinlasses 18 selbst regelnd arbeiten kann. Dabei verschließt die Klappe 8 in ihrer Ruhelage den Öffnungsbereich 6 des (hinsichtlich der Figuren 3 bis 5 vorgestellten) NACA-Senklufteinlasses 18 plan liegend zur Oberfläche der Rumpfaußenhaut 15 des Flugzeuges luftundurchlässig (also gasdichtend) ab. Luftundurchlässig deswegen, weil in der Situation von bestehendem Kabinenüberdruck (pᵢ > pₐ) oder auch bei ausgeglichenem Druckverhältnis (pᵢ = pₐ) die Klappe 8 gegen den innenrandseitlich dem Seitenrahmen 16 aufliegenden Dichtungsansatz 17 drückt.

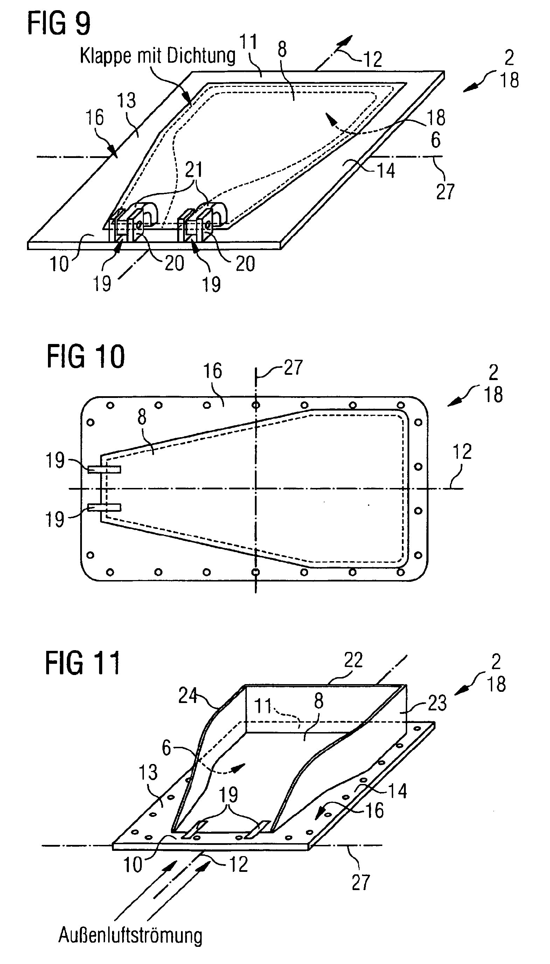

Ferner sind in den Figuren 6 und 9 zwei Federscharniere 19 dargestellt, welche auf dem (zum Öffnungsbereich 6 gerichteten) Flächenbereich der als flaches Platten- oder Trägerelement ausgebildeten Querseite 10 des Seitenrahmens 16 (nach einer der vorgenannten Figuren) angeordnet und zueinander beabstandet befestigt sind. Beide Federscharniere 19 weisen einen ersten und einen zweiten Scharnierabschnitt 20, 21 auf, wobei der erste Scharnierabschnitt 20 auf dem zur Bodenfläche des NACA-Senklufteinlasses 18 gerichteten Bereich der nehmlichen Querseite 10 befestigt ist. Der zweite Scharnierabschnitt 21 kann dem ersten Scharnierabschnitt 20 gelenkachsenbeweglich (in Richtung der Rumpfquerachse 27) gelagert werden, welcher sich in vertikaler Richtung der Rumpflängsachse 12 neigend zur Abschrägung der Bodenfläche des NACA-Senklufteinlasses 18 bewegen lässt.

Die Klappenfläche der Klappe 8, die an dem zweiten Scharnierabschnitt 21 befestigt ist, besitzt einen dem Öffnungsbereich 6 des NACA-Senklufteinlasses 18 angepassten Zuschnitt, die den (positiv) dargestellten NACA-Ausschnitt (bei Ruhelage der Klappe 8) vollständig überdeckt. Außerdem ist in dem entsprechenden Federscharnier 19 eine Rückholfeder integriert, deren jeweiliges Federende mit den beiden Scharnierabschnitten 20, 21 gekoppelt ist. Diese Rückholfeder beeinflusst den Scharnierwinkel-Ausschlag der beiden Scharnierabschnitte 20, 21 derart, dass die Rückholfeder in entspannter Position keine Rückholfederspannung speichert bzw. eine Federkraft F_{F} ausübt, sofern sich die Platte 8 in Ruhelage befindet. Erst wenn sich der zweite Scharnierabschnitt 21 in eine vertikal geöffnete Position gelenkt wird, wächst die Rückholfederspannung relativ zur Zunahme des Federweges an. Der maximal mögliche Federweg der Rückholfeder begrenzt somit den Scharnierausschlag des zweiten Scharnierabschnittes 21 und damit auch den zulässigen Scharnierwinkel-Ausschlag zwischen den beiden Scharnierabschnitten 20, 21.

Die demzufolge bereitgestellte Federkraft F_{F}, die hinsichtlich der Figuren 3 bis 5 schon erwähnt wird, ist von der Rückholfeder als rückholende Federkraft F_{F} gespeichert, deren Unterstützung bei der Rückholung der Klappe 8 aus deren geöffneten Stellung in eine Ruhelage genutzt wird.

Weil die Position der Klappe 8 wesentlich von den aktuell herrschenden Luftdruckverhältnissen [bzw. den aktuell wirkenden Luftdruckkräften (∑ F_{Pi} , ∑ F_{Pa}) auf die wirksame Klappenfläche (A_{Klappe}) der Klappe 8], also des drucklastig wirkenden Innenluftdruckes (∑ pᵢ) und des Umgebungsluftdruckes (∑ pₐ), die beide drucklastabhängig auf den Öffnungsquerschnitt des NACA-Senklufteinlasses 18 einwirken (die Federkraft F_{F} sei einmal vernachlässigt), beeinflusst wird (vgl. dazu auch die Ausführungen hinsichtlich der Figuren 3 bis 5), wird eine selbstregelnde Funktion der Klappe 8 ermöglicht, deren Rückholung aus geöffneter Lage durch die (von der Federkraft F_{F} ausgehenden) Rückholkraft der Rückholfeder unterstützt wird. Deshalb ist bspw. an dem einzelnen Federscharnier 19 wenigstens eine als Zugfeder ausgebildete Rückholfeder befestigt, weshalb die in vertikal geneigter Stellung befindliche Klappe 8 infolge einer in den Öffnungsbereich 6 verringert eintretenden Luftströmung der Umgebungsluft, sofern der Innenluftdruck (pᵢ) anwächst und sich dem Umgebungsluftdruck (pₐ) nähert, selbstregulierend durch die Federrückstellwirkung in eine zur Klappenschließstellung geneigten oder ihr nahekommenden Position zurückgeführt wird. Anderenfalls wird diese Klappe 8 auch infolge einer abfallenden, in den Öffnungsbereich 6 eintretenden Luftströmung der Umgebungsluft, deren Abfall (Senkung) sich bis zum Ausbleiben des Eintritts dieser Luftströmung in den Öffnungsbereich 6 vermindert, sofern der Innenluftdruckes pᵢ ein Wachstum erreicht, das größer oder gleich dem Umgebungsluftdruck pₐ ist, selbstregulierend durch die Federrückstellwirkung bis in ihre Ruhelage zurückgeführt.

Ergänzend der Betrachtungen hinsichtlich der Figur 6 (als Draufsicht des NACA-Senklufteinlass-bereiches mit integrierter Klappe 8) und der Figur 9 (Perspektiv-Ansicht mit den hervorgehobenen Ventilbestandteilen) wird in der Figur 7 eine Darstellung des Schnittes A - A nach der Fig. 6 (für eine Seitenansicht des Lufteinlassventils 2 nach Fig. 6 in geschlossener Position) und in der Figur 7 eine Darstellung des Schnittes A - A nach der Fig. 6 (für eine Seitenansicht des Lufteinlassventils 2 nach Fig. 6 in geöffneter Position) gezeigt.

Das Lufteinlassventil 2 wird gemäß den Figuren 6, 8 und 9 in seiner Ruhelage - mit seiner plan der Außenhautoberfläche abschließenden Klappenfläche - komplett ein in der Rumpfaußenhaut 15 befindliches Loch in NACA-Form verschließen. Beim Öffnen dieses Ventils findet die Einströmung der Umgebungsluft 3 über die stromabwärts liegende Querkante der hinterrandseitig befindlichen zweiten Querseite 11, die strömungstechnisch betrachtet eine Staukante ist, aber auch über die Längsseiten 13, 14 des Seitenrahmens 16 statt. Die Ventilöffnung beziehungsweise die Neigung der Klappe 8 (zu einer der Fig. 7 entsprechenden Lage) wird über das Kräftegleichgewicht aus Federkraft F_{F}, Druckdifferenz Δp sowie aerodynamischen Kräften ∑ F_{Pi}, ∑ F_{Pa} geregelt.

Die Fig. 10 ähnelt sehr der Draufsicht nach der Fig. 6, weil man aus dieser Darstellung keine weiteren Wandbegrenzungen entnehmen wird. Erst in der Fig. 11 werden diese Wandbegrenzungen gezeigt.

Diese Wandbegrenzungen 22, 23, 24 sind randseitlich der Seitenrahmenumrahmung in lotrechter Lage befindlich an den zum Öffnungsbereich 6 des NACA-Senklufteinlasses 18 gerichteten Seitenkanten der Quer- und Längsseiten 10, 11, 13, 14 - also unterhalb dem Seitenrahmen 16 - befestigt. Davon ausgenommen bleibt der an den vorderseitigen Abschnitt 9 angrenzende Bereich des NACA-Senklufteinlasses 18. Dabei ist eine erste Wandbegrenzung 22 dem Verlauf der Rumpfquerachse 27 entsprechend angeordnet, wogegen zwei weitere gleichartige Wandbegrenzungen 23, 24 in Richtung der Rumpflängsachse 12 verlaufen. Diese Wandbegrenzungen 22, 23, 24 besitzen die Gestalt einer rechteckflächigen Seitenwand deren betreffende Breitseiten-Kanten, soweit sie einander gegenüberstehen und berühren, in diesem Bereich befestigt sind. Danach ist die Klappe 8 in Abhängigkeit der auf sie luftdrucklastig einwirkenden Kräfteverhältnisse entweder innerhalb dem von Wandbegrenzungen eingeschlossenen Öffnungsbereich frei beweglich angeordnet ist oder die Klappe 8 ist während ihrer Ruhelage innerhalb diesem Öffnungsbereich, den der Seitenrahmen 16 einschließt, positioniert. Dabei ist der Klappenrand der Klappe 8 vorzugsweise dem Dichtungsansatz 17, der streifenartig ausgeführt und den Längs- und Querseiten (10, 11, 13, 14) des Seitenrahmens (16) befestigt ist, aufliegend. Das in der Flugzeughaut liegende Loch in NACA-Form wird demnach von den Wandbegrenzungen 22, 23, 24 begrenzt. Die Einströmung der Umgebungsluft 3 geschieht über die Staukante des Ventils.

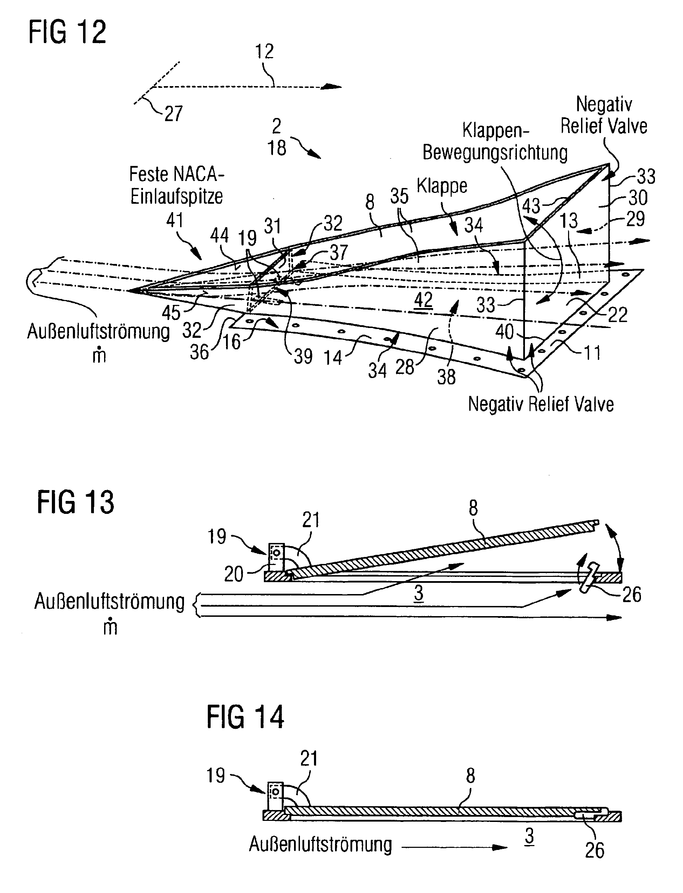

In der Fig. 12 wird nun ein kompletter NACA-Senklufteinlass 18 mit installiertem Lufteinlassventil 2 gezeigt. Dessen Aufbau ist demjenigen ähnlich, der in der Fig. 11 dargestellt wird. Die Unterschiede beschränken sich im Vergleich der Fig. 11 auf folgenden Elementetausch:
a) Ersetzen der zweiten Wandbegrenzung 23 durch eine trapezflächige Seitenplatte 28;
b) Ersetzen der dritten Wandbegrenzung 24 durch eine trapezflächige Seitenplatte 29;
c) Entfernen der ersten Wandbegrenzung 22 ohne Ersatz; und
d) randseitliches Befestigen einer rechteckförmigen Grundplatte 38 an den freien Seitenkanten der Quer- und Längsseiten 10, 11, 13, 14 der Seitenrahmenbegrenzung.

Die beiden parallelen Seiten 32, 33 (Grundlinien) der beiden Seitenplatten 28, 29 besitzen eine unterschiedliche Länge, die dem Anfang und dem Ende von einer ersten nicht parallelen Seite 34 lotrecht auf dieser stehend angeordnet sind. Die zweite nicht parallele Seite 35 dieser Seitenplatten 28, 29 ist mit den verbleibenden freien Enden der beiden parallelen Seiten 32 verbunden. Soweit die beispielsbezogene Erläuterung der trapezflächigen Platten-Gestalt der Seitenplatten 28, 29, auch um darauf hinzuweisen, dass demnach jeweils eine erste Seitenplatte 28 mit ihrer ersten nicht parallelen Seite 34 an der freien Seitenkante der zweiten Längsseite 14 befestigt ist. Demgemäß übertragen ist auch eine zweite Seitenplatte 29 mit ihrer ersten nicht parallelen Seite 34 an der freien Seitenkante der ersten Längsseite 13 befestigt.

An einer ersten parallelen Seite 32 der beiden Seitenplatten 28, 29, die - im Vergleich der zweiten parallelen Seite 33 - eine geringere Länge aufweist, sowie an den verbleibenden vorderrandseitlichen Querseiten-Kanten 36, 37 der beiden Längsseiten 13, 14 des Seitenrahmens 16, die wegen der beispielgemäßen fehlenden Installation der ersten Querseite 10 des Seitenrahmens 16 (vorerst) unbefestigt sind und deren Kantenverlauf demjenigen einer ersten Breitkante 39 der Grundplatte 38 entspricht, und ebenfalls an dieser ersten Breitkante 39 (der Grundplatte 38) ist eine sogenannte "Feste NACA-Einlaufspitze" 41, die eine pyramidenähnliche Gestalt besitzt, mit den betreffenden Seitenkanten der vorhandenen Pyramiden-Seitenflächen, die einen offengehaltenen rechteckigen Querschnitt der Pyramiden-Grundfläche einschließen, befestigt. Vorzugsweise ist der neben der Grundplatte 38 angeordnete Bereich einer Pyramidenseitenfläche 45 ebenfalls freigehalten, durch den die Umgebungsluft 3 (insbesondere nur zu Teilen) über die NACA-Einlaufspitze 41 und den in den offengehaltenen rechteckigen Querschnitt der Pyramiden-Grundfläche (resp. den gleichgroßen rechteckigen Querschnitt die erwähnte Öffnung 31) und weitergeführt in den von den Seitenplatten 28, 29 und der Grundplatte 38 eingegrenzten Durchgangs-Luftvolumen-Bereich 42 geleitet wird, die in Richtung des (nicht gezeigten) Rumpfinnenbereiches 7 die Öffnung 30, welche endseitig der beiden (eine erweiterte Länge aufweisenden) zweiten parallelen Seiten 33, deren verbleibenden freien Enden durch eine diesen (Enden) verbundene hinterrandseitige dritte Querseite 43 stabilisiert wird, die aus den Seitenplatten 28, 29 und der Grundplatte 38 gebildete (und zunächst klappenvernachlässigte) Konstruktion verlässt.

Mit dem NACA-Senklufteinlass 18 nach Fig. 12 und der noch zu komplettierenden Klappe 8 ist das Lufteinlassventil 2 strömungsoptimiert und kann selbstregelnd arbeiten. Diese Klappe 8 ist ferner an zwei Federscharnieren 19, die auf einer geschlossenen Pyramidenseitenfläche 44, welche sich gegenüberliegend dem offenen Querschnitt der Pyramidenseitenfläche 45 befindet, randseitlich und nahe dem offengehaltenen rechteckigen Querschnitt der Pyramiden-Grundfläche platziert sind, befestigt. Sofern die Klappe 8 sich bei Kabinenluftüberdruck oder ausgeglichenem Luftdruckverhältnis in Ruhelage befindet, liegen deren (nicht befestigte) Klappenränder parallel zu den zweiten nicht parallelen Seiten 35 und der dritten Querseite 43. Herrscht in der Kabine Unterdruck, dann bewegt sich die Klappe 8 in Richtung der genannten Grundplatte 35. Anderenfalls liegt die Klappe 8 mit ihrer (der scharnierbefestigten Klappenkante gegenüberliegenden) nicht befestigten Klappenkante auf der Grundplatte 35 auf. Durch letztere Maßnahme wird eine zunächst teilweise Sperrung der Durchlassrichtung der durch diesen NACA-Senklufteinlass 18 geleiteten Strömung der Umgebungsluft selbst regelnd beeinflusst.

Abschließend wird erwähnt, dass die NACA-Form vorzugsweise plastisch in die Flugzeugoberfläche integriert ist. Die differenzdruckabhängig arbeitende Klappe 8 des Lufteinlassventils 2 (ausgebildet als "Negativ Relief Valve") ist nur ein Teil dieses vorgestellten NACA-Senklufteinlasses 18 mit fester NACA-Einlaufspitze.

Nach den Figuren 13, 14 wird ein mit dem Lufteinlassventil 2 ausgestatteter NACA-Senklufteinlass 18 gemäß dem Vorbild nach den Figuren 7 und 8 gezeigt, mit einer gattungsgemäße Nebenklappe 26. Danach wird diese Nebenklappe 26 nach der Fig. 13 in einer geöffneten und nach der Fig. 14 in einer geschlossenen Position dargestellt.

Die Nebenklappe 26 ist (mit einem Blick auf die - hinsichtlich der Figuren 7 und 8 - korrelierende Fig. 6) an der zweiten Querseite 11 befestigt. Dabei ist der (ebenfalls) drehbeweglich gelagerte Klappenrand der Nebenklappe 26 am zum Öffnungsbereich 6 weisenden Längsseitenbereich der Querseite 11 angeordnet, wobei die Klappenfläche der Nebenklappe 26 nach außerhalb des Öffnungsbereiches 6 in Richtung des Außenbereiches des Flugzeugrumpfes schwenkbar gestaltet ist. Mit der Nebenklappe 26 lässt sich, deren ausgeschwenkte Lage vorausgesetzt, zusätzliche Umgebungsluft 3 oder Rumpfaußenluft in den Öffnungsbereich 6 leiten.

Sofern die Klappe 8 in ihre Ruhelage zurückgeführt wird, wird die Nebenklappe 26 in eine horizontale Klappenlage zurückgeschwenkt. Deren Querschnitt wird demnach mit ein Bestandteil des wirksam den Öffnungsbereich 6 luftdichtenden Klappenquerschnitts. Deshalb sind die Ausnehmungen 25 der (in dieser Situation als Haupt-Klappe benutzten) Klappe 8 dem Klappen-Querschnitt der Nebenklappe 26 in nicht verschwenkter Lage angepasst. Der Oberfläche der Nebenklappe 26 kann außerdem ein Dichtmaterial-Überzug aufgetragen werden, anderenfalls der vorerwähnte Dichtungsansatz 17 derart positioniert wird, damit die sogenannte Hauptklappe in Ruhelage wirksam luftundurchlässig gegen das Eindringen von Außenluft 3 in den Öffnungsbereich 6 dichtet.

Es handelt sich demnach um eine zusätzlich an der Staukante dieses Lufteinlassventils 2 angebrachte kleine Nebenklappe 26, die beim Öffnen der (sogenannten) Hauptklappe nach außen (also in Richtung der Außenumgebung des Flugzeugrumpfes) schwenkt und (im Bereich des NACA-Senklufteinlasses 18) zusätzliche Mengen von Außenluft 3 in den Flugzeugrumpf leitet.

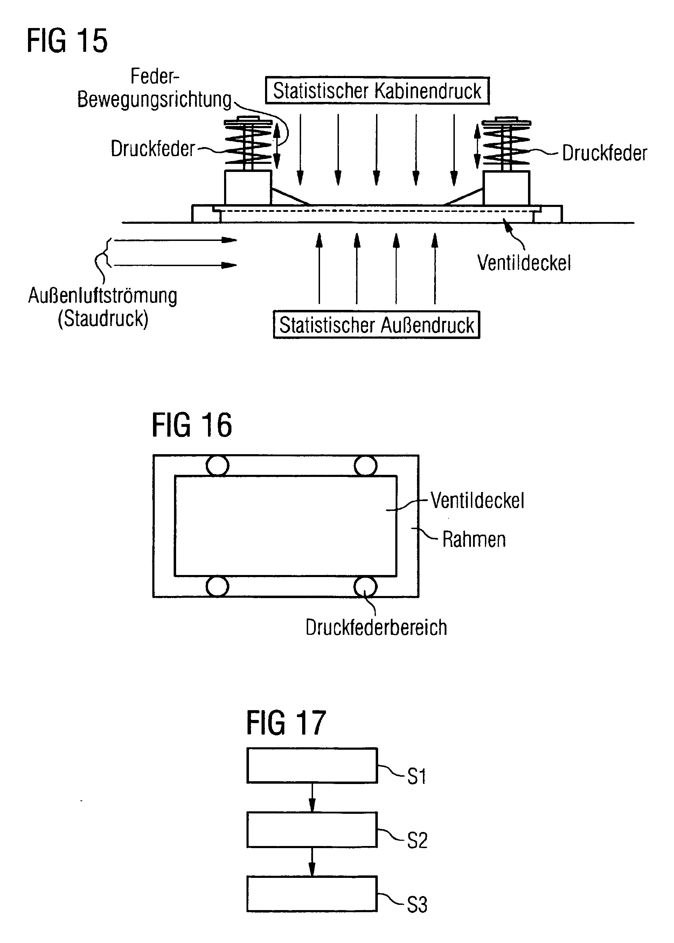

In Fig. 17 ist ein schematisches Ablaufdiagramm eines Ausführungsbeispiels eines erfindungsgemäßen Verfahrens zum Herstellen eines Lufteinlassventils 2 für ein Flugzeug dargestellt.

Nachfolgend wird das erfindungsgemäße Verfahren anhand des Blockschaltbildes in Fig. 17 mit Bezug auf die Fig. 3 bis 5 erläutert. Das erfindungsgemäße Verfahren gemäß Fig. 17 weist die Verfahrensschritte S1 bis S3 auf:

### Verfahrensschritt S1:

Ein Öffnungsbereich 6 zum Durchlassen von Umgebungsluft 3 in einen Rumpfinnenbereich 7 des Flugzeugs wird bereitgestellt.

### Verfahrensschritt S2:

Eine Klappe 8 wird über dem Öffnungsbereich 6 zum Öffnen und Schließen des Öffnungsbereiches 6 angeordnet.

### Verfahrensschritt S3:

Die Form des Öffnungsbereiches 6 und der Klasse 8 wird jeweils derart ausgebildet, dass sie dazu geeignet ist, bei einer Luftströmung der Umgebungsluft 3 durch das Lufteinlassventil 2 Luftwirbel an Kanten 4 des Öffnungsbereiches 6 zu bilden.

Obwohl die vorliegende Erfindung anhand bevorzugter Ausführungsbeispiele beschrieben wurde, ist sie darauf nicht beschränkt, sondern auf vielfältige Art und Weise modifizierbar.

### Bezugszeichenliste

- 1: Senklufteinlass
- 2: Lufteinlassventil
- 3: Umgebungsluft
- 4: Ausschnittskanten [des (NACA-) Senklufteinlasses 1]; Rampenkanten; Kanten
- 5: Luftwirbel(paare)
- 6: Öffnungsbereich (des Senklufteinlasses 1
- 7: Rumpfinnenbereich
- 8: Klappe
- 9: Abschnitt, vorderrandseitig (des Senklufteinlasses 1)
- 91: Abschnitt, hinterrandseitig (des Senklufteinlasses 1)
- 92: Abschnitt, seitwärtsrandseitlich (des Senklufteinlasses 1)
- 93: Abschnitt, seitwärtsrandseitlich (des Senklufteinlasses 1)
- 10: Querseite, vorder(rand)seitig
- 11: Querseite, hinter(rand)seitig
- 12: Rumpflängsachse
- 13: Längsseite
- 14: Längsseite
- 15: Rumpfaußenhaut
- 16: Seitenrahmen
- 17: Dichtungsansatz; Dichtungsstreifen
- 18: NACA-Senklufteinlass
- 19: Federscharnier
- 20: Scharnierabschnitt, erster
- 21: Scharnierabschnitt, zweiter
- 22: Wandbegrenzung, erste
- 23: Wandbegrenzung, zweite
- 24: Wandbegrenzung, dritte
- 25: Ausnehmung, randseitlich, streifenartig (des Klappenrandes der Klappe 8)
- 26: Nebenklappe, drehbeweglich gelagert
- 27: Rumpfquerachse
- 28: Seitenplatte, erste; trapezflächig
- 29: Seitenplatte, zweite; trapezflächig
- 30: Öffnung
- 31: Öffnung
- 32: parallele Seite, erste (der trapezförmigen Seitenplatten 28, 29)
- 33: parallele Seite, zweite (der trapezförmigen Seitenplatten 28, 29)
- 34: nicht parallele Seite, erste (der trapezförmigen Seitenplatten 28, 29)
- 35: nicht parallele Seite, zweite (der trapezförmigen Seitenplatten 28, 29)
- 36: vorderrandseitliche Querseiten-Kante (der Längsseite 14)
- 37: vorderrandseitliche Querseiten-Kante (der Längsseite 13)
- 38: Grundplatte
- 39: Breitkante, erste (der Grundplatte 38)
- 40: Breitkante, zweite (der Grundplatte 38)
- 41: feste NACA-Einlaufspitze
- 42: Durchgangs-Luftvolumen-Bereich
- 43: hinterrandseitliche Querseite, dritte
- 44: Pyramidenseitenfläche, geschlossen (geschlossene Querschnittsfläche)
- 45: Pyramidenseitenfläche, offen (offene Querschnittsfläche)

- pᵢ: Innenluftdruck
- pₐ: Umgebungsluftdruck
- Δp: Differenzluftdruck
- F_{Pi}: Luftdruckkraft des Innenluftdrucks
- F_{Pa}: Luftdruckkraft des Umgebungsluftdrucks
- F_{F}: Federkraft der Rückholfeder
- A_{Klappe}: Klappenfläche (der Klappe 8)
- m: (Punkt) Massen(luft)durchsatz
- cabin: Kabine(nbereich)
- ambient: Atmosphäre (Flugzeug-Umgebung)

## Patentansprüche

1. Lufteinlassventil (2) für ein Flugzeug, mit:
einem Öffnungsbereich (6) zum Durchlassen von Umgebungsluft (3) in einen Rumpfinnenbereich (7) des Flugzeuges, einer Klappe (8) zum Öffnen und Schließen des Öffnungsbereiches (6), wobei der Öffnungsbereich (6) und die Klappe (8) jeweils eine Form aufweisen, welche dazu geeignet ist, bei einer Luftströmung der Umgebungsluft (3) durch das Lufteinlassventil (2) Luftwirbel an Kanten (4) des Öffnungsbereiches (6) zu bilden,
wobei die Klappe (8) stromaufwärts des Flugzeugrumpfes an einer ersten Querseite (10) des Seitenrahmens (16), die quer zur Rumpflängsachse (12) gelegen ist, befestigt ist, die im Bereich der Befestigungsstelle drehbeweglich gelagert ist,
wobei an einer zweiten Querseite (11) eine Nebenklappe (26) befestigt ist, deren drehbeweglich gelagerter Klappenrand am zum Öffnungsbereich (6) weisenden Längsseitenbereich der Querseite (11) angeordnet ist, wobei die Klappenfläche der Nebenklappe (26) bis nach außerhalb des Öffnungsbereiches (6) in Richtung des Rumpfaußenbereiches schwenkbar ist, mit der sich in ihrer ausgeschwenkten Lage zusätzlich Umgebungsluft (3) in den Öffnungsbereich (6) leiten lässt.

2. Lufteinlassventil nach Anspruch 1, **dadurch gekennzeichnet, dass** das Lufteinlassventil (2) im Bereich eines NA-CA-Senklufteinlasses (18) positioniert ist, mit dem bei einem invers wirkenden Differenzluftdruck (Δp) zwischen einem druckbelüfteten Rumpfinnenbereich (7) eines Flugzeugrumpfes, der von einem Innenluftdruck (pᵢ) beaufschlagt wird, und einem in stromabwärtiger Richtung des Flugzeugrumpfes längsabgesenkten NACA-Senklufteinlaufbereich, der innerhalb einer den Flugzeugrumpf umhüllenden Rumpfaußenhaut (15) angeordnet ist und dem Rumpfinnenbereich (7) luftstromverbunden ist, ein Luftdruckausgleich geschaffen wird, wobei auf einem Öffnungsbereich (6) des NACA-Senklufteinlasses (18) eingangs des NACA-Senklufteinlaufbereiches ein atmosphärischer Umgebungsluftdruck (pₐ) lastet, den ein Seitenrahmen (16) eingrenzt und die in Ruhelage befindliche Klappe (8) überdeckt, wobei die Klappe (8) den Öffnungsbereich (6), sofern der Umgebungsluftdruck (pₐ) größer dem Innenluftdruck (pᵢ) ist, verschließt.

3. Lufteinlassventil nach Anspruch 1, **dadurch gekennzeichnet, dass** sich die Befestigungsstelle in Abhängigkeit der auf sie luftdrucklastig einwirkenden Kräfteverhältnisse zu dem mit dem Rumpfinnenbereich (7) verbundenen Öffnungsbereiches (6) ausgangs des NACA-Senklufteinlaufbereiches bewegen lässt.

4. Lufteinlassventil nach Anspruch 3, **dadurch gekennzeichnet, dass** mittels des Öffnungsbereiches (6) unter Ausnutzung von den an den rampenseitlichen Ausschnittskanten des NACA-Senklufteinlassbereiches auftretenden Luftwirbeln (5) der teilweise in den NACA-Senklufteinlaufbereich einströmenden Außenluft, die sich kantenrandseitlich der Klappe (8) fortsetzen, eine strömungsoptimierte und eine selbstregelnd arbeitende Lufteinlassventilfunktion umsetzbar ist.

5. Lufteinlassventil nach wenigstens einem der vorstehenden Ansprüche, **dadurch gekennzeichnet, dass** das Lufteinlassventil (2) als ein autarkes Lufteinlassventil (2) ausgebildet ist.

6. Lufteinlassventil nach wenigstens einem der vorstehenden Ansprüche, **dadurch gekennzeichnet, dass** der Öffnungsbereich (6) des NACA-Senklufteinlasses (18) von der in Ruhelage ihn überdeckenden Klappe (8), wenn der Innenluftdruck (pᵢ) größer oder gleich dem Umgebungsluftdruck (pₐ) ist, gasdicht verschlossen ist, anderenfalls bei einem gegenüber dem Umgebungsluftdruck (pₐ) bestehenden Rumpfluftunterdruck der Öffnungsbereich (6) des Senklufteinlasses (1) von der zum Rumpfinnenbereich (7) geneigten Klappe (8), wenn der Innenluftdruck (pᵢ) kleiner dem Umgebungsluftdruck (pₐ) ist, luftströmungsdurchlässig freigegeben ist, wobei in dieser Situation ein Luftdruckausgleich zum Rumpfinnenbereich (7) erfolgt.

7. Lufteinlassventil nach wenigstens einem der vorstehenden Ansprüche, **dadurch gekennzeichnet, dass** der Seitenrahmen (16) neben der ersten Querseite (10) eine zweite Querseite (11) und den Enden der beiden Querseiten (10, 11) verbundene Längsseiten (13, 14) umfasst, dabei der ersten Querseite (10) gegenüberliegend eine stromabwärts des Flugzeugrumpfes befindliche zweite Querseite (11), die quer zur Rumpflängsachse (12) gelegen ist, angeordnet ist, die angrenzend einem hinterrandseitigen Abschnitt (91) des NACA-Senklufteinlasses (18) gelegen ist, außerdem eine erste Längsseite (13) und eine zweite Längsseite (14) angrenzend dem kantenrandseitlichen Abschnitt (92, 93) des NACA-Senklufteinlasses (18) angeordnet sind, deren Seitenrandbereich demjenigen der betreffenden Querseite (10, 11) links- und rechtsgelegen mechanisch verbunden ist, wobei der Verlauf die beiden Längsseiten (13, 14) dem der Rumpflängsachse (12) entspricht, weiterhin der mit den Quer- und Längsseiten (10, 11, 13, 14) gebildete Seitenrahmen (16) seitwärts dem Öffnungsbereich (6) des Senklufteinlasses (1) an der Rumpfaußenhaut (15) mechanisch befestigt ist, wobei die Quer- und Längsseiten (10, 11, 13, 14), die als flache ebenflächige Platten- oder Trägerelemente ausgebildet sind, außerhalb des Öffnungsbereiches (6) des Senklufteinlasses (1) oder diesen randseitig geringfügig überdeckend angeordnet sind, deren Kontur dem Konturenverlauf der Rumpfaußenhaut (15) angepasst ist, die den Querschnitt des Öffnungsbereiches (6) des Senklufteinlasses (1) einschließen.

8. Lufteinlassventil nach wenigstens einem der vorstehenden Ansprüche, **dadurch gekennzeichnet, dass** die ruhende Klappe (3), die in dieser Lage in einer den Öffnungsbereich (6) des NACA-Senklufteinlasses (18) bedeckenden Position angeordnet ist, gegen einen zur NACA-Senklufteinlassöffnung weisenden streifenartigen Dichtungsansatz (17), der dem zum Rumpfinnenbereich (7) weisenden Seitenabschnitt der Quer- und Längsseiten (10, 11, 13, 14) aufliegend befestigt ist, drückend und gleichfalls gegen rumpfumgebende Außenluftströmung absolut dichtend positioniert ist, wobei die in Ruhelage positionierte Klappe (8), die einen längsabgesenkten Kanaleinlauf des NACA-Senklufteinlasses (18) verschließt, plan zur Oberfläche der Rumpfaußenhaut (15) angeordnet ist.

9. Lufteinlassventil nach wenigstens einem der vorstehenden Ansprüche, **dadurch gekennzeichnet, dass** die Quer- und Längsseiten (10, 11, 13, 14) durch Seitenkanten der Rumpfaußenhaut (15), die seitwärts der Senklufteinlass-öffnung angesetzt sind, ersetzt sind.

10. Lufteinlassventil nach wenigstens einem der vorstehenden Ansprüche, **dadurch gekennzeichnet, dass** der ersten Querseite (10) mindestens ein Federscharnier (19) befestigt ist, wobei ein erster Scharnierabschnitt (20) auf der ersten Querseite (10) befestigt ist und ein dem ersten Scharnierabschnitt (20) drehbeweglich gelagerter zweiter Scharnierabschnitt (21) sich in vertikaler Richtung zur Abschrägung der Bodenfläche des NACA-Senklufteinlasses (18) neigend bewegen lässt, an dem die Klappe (8) randseitlich befestigt ist.

11. Lufteinlassventil nach wenigstens einem der vorstehenden Ansprüche, **dadurch gekennzeichnet, dass** mehrere quer zur Rumpflängsachse (12) angeordnete und zueinander beabstandete Federscharniere (19) an der ersten Querseite befestigt sind, wobei die Befestigung des quer zur Rumpflängsachse (12) verlaufenden Randes der Klappe (8) mit geringerer Breite an zwei Federscharnieren (19) ausreichend ist.

12. Lufteinlassventil nach wenigstens einem der vorstehenden Ansprüche, **dadurch gekennzeichnet, dass** ein Scharnierwinkel-Ausschlag, den der zweite Scharnierabschnitt (21) in einer vertikal geöffneten Scharnierstellung befindliche gegenüber dem ersten Scharnierabschnitt (20) einschließt, durch den Federweg von wenigstens einer Rückholfeder, deren betreffendes Federende dem einzelnen Scharnierabschnitt (20, 21) befestigt ist, begrenzt ist.

13. Lufteinlassventil nach wenigstens einem der vorstehenden Ansprüche, **dadurch gekennzeichnet, dass** dem einzelnen Federscharnier (19) wenigstens eine als Zugfeder ausgebildete Rückholfeder befestigt ist, weshalb die in vertikal geneigter Stellung befindliche Klappe (8) infolge einer in den Öffnungsbereich (6) gemindert eintretenden Luftströmung der Umgebungsluft, sofern der Innenluftdruck (pᵢ) anwächst und sich dem Umgebungsluftdruck (pₐ) nähert, selbstregulierend durch die Federrückstellwirkung in eine zur Klappenschließstellung geneigten oder ihr nahekommenden Position zurückgeführt wird, wobei die Klappe (8) auch anderenfalls infolge einer in den Öffnungsbereich (6) eintretenden und weiter abfallenden Luftströmung der Umgebungsluft, deren mengenmäßiger Strömungsabfall sich bis zum Ausbleiben dieser Luftströmung in den Öffnungsbereich (6) vermindert, sofern der Innenluftdruckes (pᵢ) ein Wachstum erreicht, das größer oder gleich dem Umgebungsluftdruck (pₐ) ist, selbstregulierend durch die Federrückstellwirkung bis in ihre Ruhelage zurückgeführt wird.

14. Lufteinlassventil nach Anspruch 1, **dadurch gekennzeichnet, dass** die Ausnehmungen (25) der Klappe (8) dem Querschnitt der Nebenklappe (26) in nicht verschwenkter Lage angepasst sind.

15. Verfahren zum Herstellen eines Lufteinlassventils (2) für ein Flugzeug, mit:
Bereitstellen eines Öffnungsbereiches (6) zum Durchlassen von Umgebungsluft (3) in einen Rumpfinnenbereich (7) des Flugzeugs,
Anordnen einer Klappe (8) über dem Öffnungsbereich (6) zum Öffnen und Schließen des Öffnungsbereiches (6),
Ausbilden der Form des Öffnungsbereiches (6) und der Klappe (8) jeweils derart, dass diese dazu geeignet ist, bei einer Luftströmung der Umgebungsluft (3) durch das Lufteinlassventil (2) Luftwirbel an Kanten (4) des Öffnungsbereiches (6) zu bilden,
wobei die Klappe (8) stromaufwärts des Flugzeugrumpfes an einer ersten Querseite (10) des Seitenrahmens (16), die quer zur Rumpflängsachse (12) gelegen ist, befestigt ist, die im Bereich der Befestigungsstelle drehbeweglich gelagert wird,
wobei an einer zweiten Querseite (11) eine Nebenklappe (26) befestigt wird, deren drehbeweglich gelagerter Klappenrand am zum Öffnungsbereich (6) weisenden Längsseitenbereich der Querseite (11) angeordnet ist, wobei die Klappenfläche der Nebenklappe (26) bis nach außerhalb des Öffnungsbereiches (6) in Richtung des Rumpfaußenbereiches schwenkbar ist, mit der sich in ihrer ausgeschwenkten Lage zusätzlich Umgebungsluft (3) in den Öffnungsbereich (6) leiten lässt.

## Claims

1. Air inlet valve (2) for an aircraft, comprising:
- an opening region (6) for allowing ambient air (3) to pass through into a fuselage region (7) of the aircraft,
- a flap (8) for opening and closing the opening region (6), the opening region (6) and the valve (8) each being of a form which is suitable for forming air eddies at edges (4) of the opening region (6) when the ambient air (3) flows through the air inlet valve (2),
wherein the flap (8) is fastened, upstream from the aircraft fuselage, to a first transverse side (10) of the side frame (16) which is laid transversely with respect to the fuselage longitudinal axis (12), which is mounted rotatably in the region of the fastening point,
wherein an auxiliary flap (26), the rotatably mounted flap edge of which is arranged on the longitudinal side region, facing the opening region (6), of the transverse side (11), is fastened to a second transverse side (11),
the flap face of the auxiliary flap (26), which makes it possible for additional ambient air (3) to pass into the opening region (6) in the pivoted-out position thereof, being pivotable towards the fuselage outer region until outside the opening region (6).

2. Air inlet valve according to claim 1, **characterised in that** the air inlet valve (2) is positioned in the region of an NACA falling air inlet (18), by means of which air pressure compensation is provided in the event of an inversely acting air pressure difference (Δp) between a pressurised fuselage interior region (7) of an aircraft, which is loaded with an internal air pressure (pᵢ), and a NACA falling air entry region, which is longitudinally lowered in the downstream direction of the aircraft fuselage and which is arranged inside a fuselage outer skin (15) enclosing the aircraft fuselage and connected to the fuselage interior region (7) in terms of airflow, an atmospheric ambient air pressure (pₐ) loading an opening region (6) of the NACA falling air inlet (18) at the entry of the NACA falling air entry region, which is delimited by a side frame (16) and covered by the flap (8) located in the rest position, the flap (8) sealing the opening region (6) whenever the ambient air pressure (pₐ) is greater than the internal air pressure (pᵢ).

3. Air inlet valve according to claim 1, **characterised in that** the fastening point can be moved as a function of the force relationships, exerting air pressure thereon, with respect to the opening region (6) connected to the fuselage interior region (7) at the output of the NACA falling air inlet region.

4. Air inlet valve according to claim 3, **characterised in that**, by means of the opening region (6), a flow-optimised air inlet valve function which operates in a self-regulating manner can be implemented by making use of the air eddies (5), occurring at the ramp-side cutout edges of the NACA falling air inlet region, of the external air which flows into the NACA falling air entry region in part, which eddies continue at the edge sides of the flap (8)

5. Air inlet valve according to at least one of the preceding claims, **characterised in that** the air inlet valve (2) is in the form of a self-sufficient air inlet valve (2).

6. Air inlet valve according to at least one of the preceding claims, **characterised in that** the opening region (6) of the NACA falling air inlet (18) is sealed in a gas-tight manner by the flap (8) which covers it in the rest position, when the internal air pressure (pᵢ) is greater than or equal to the ambient air pressure (pₐ), and otherwise is released, making it possible for air to pass through, in the event of a fuselage air underpressure, with respect to the ambient air pressure (pₐ), of the opening region (6) of the falling air inlet (1) of the flap (8), which is inclined with respect to the fuselage interior region (7), when the internal air pressure (pᵢ) is less than the ambient air pressure (pₐ), air pressure compensation taking place with respect to the fuselage interior region (7) in this situation.

7. Air inlet valve according to at least one of the preceding claims, **characterised in that**, aside from the first transverse side (10), the side frame (16) comprises a second transverse side (11) and longitudinal sides (13, 14) connected to the ends of the two transverse sides (10, 11), the first transverse side (10) being positioned opposite a second transverse side (11), which is located downstream from the aircraft fuselage and which is positioned transverse to the fuselage longitudinal axis (12), which is positioned adjacent to a rear-edge portion (91) of the NACA falling air inlet (18), a first longitudinal side (13) and a second longitudinal side (14) further are arranged adjacent to the edge side portion (92, 93) of the NACA falling air inlet (18), the side edge region of said sides being mechanically connected on the left and on the right to that of the relevant transverse side (10, 11), the progression of the two longitudinal sides (13, 14) corresponding to that of the fuselage longitudinal axis (12), the side frame (16) formed with the transverse and longitudinal sides (10, 11, 13, 14) further is mechanically fastened to the fuselage outer skin (15) laterally with respect to the opening region (6) of the falling air inlet (1), the transverse and longitudinal sides (10, 11, 13, 14), which are in the form of flat, planar plates or support elements, being arranged outside the opening region (6) of the falling air inlet (1) or slightly overlapping it at the edges, the contour thereof being adapted to the contour progression of the fuselage outer skin (15), and including the cross-section of the opening region (6) of the falling air inlet (1).

8. Air inlet valve according to at least one of the preceding claims, **characterised in that** the resting flap (3), which in this position is arranged in a position covering the opening region (6) of the NACA falling air inlet (18), is positioned pressing against a strip-like sealing lip (17) - which faces towards the NACA falling air inlet opening and is fastened lying against the side portion, facing the fuselage interior region (7), of the transverse and longitudinal sides (10, 11, 13, 14) - and also so as to be absolutely tight against external airflow surrounding the fuselage, the flap (8) positioned in the rest position, which seals a longitudinally lowered duct entrance of the NACA falling air inlet (18), being arranged planar with respect to the surface of the fuselage outer skin (15).

9. Air inlet valve according to at least one of the preceding claims, **characterised in that** the transverse and longitudinal sides (10, 11, 13, 14) have been replaced by side edges of the fuselage outer skin (15), which are placed on laterally with respect to the falling air inlet opening.

10. Air inlet valve according to at least one of the preceding claims, **characterised in that** at least one resilient hinge (19) is fastened to the first transverse side (10), a first hinge portion (20) being fastened to the first transverse side (10), and a second hinge portion (21), which is rotatably mounted on the first hinge portion (20), being able to move in a vertical direction at an inclination to the bevelling of the base face of the NACA falling air inlet (19) to which the clap (8) is fastened at the edge.

11. Air inlet valve according to at least one of the preceding claims, **characterised in that** a plurality of resilient hinges (19), which are arranged transverse with respect to the fuselage longitudinal axis (12) and mutually spaced, are fastened to the first transverse side, it being sufficient for the edge of the flap (8) which extends transverse to the fuselage axis (12) to be fastened to two resilient hinges (19) over a small width.

12. Air inlet valve according to at least one of the preceding claims, **characterised in that** a hinge angle deflector, which is enclosed by the second hinge portion (21) located in a vertically open hinge position with respect to the first hinge portion (20), is delimited by the spring path of at least one restoring spring, the relevant spring end of which is fastened to the individual hinge portion (20, 21).

13. Air inlet valve according to at least one of the preceding claims, **characterised in that** at least one restoring spring in the form of a tension spring is fastened to the individual spring hinge (19), and the flap (8) which is located in the vertically inclined position is therefore returned into a position inclined with respect to the flap closure position or in the vicinity thereof, in a self-regulating manner as a result of the restoring action of the spring, as a result of a reduced air flow of the ambient air entering the opening region (6), if the internal air pressure (pᵢ) is growing and approaching the ambient air pressure (pₐ), the flap (8) also otherwise being restored into the rest position thereof, in a self-regulating manner as a result of the restoring action of the spring, as a result of an air flow of the ambient air entering the opening region (6) and continuing to drop, if the internal air pressure (pᵢ) exhibits a growth greater or equal to the ambient air pressure (pₐ).

14. Air inlet valve according to claim 1, **characterised in that** the recesses (25) in the flap (8) are adapted to the cross-section of the auxiliary flap (26) in the non-pivoted position.

15. Method for manufacturing an air inlet valve (2) for an aircraft, comprising:
- providing an opening region (6) for making it possible for ambient air (3) to pass through into a fuselage interior region (7) of the aircraft,
- arranging a flap (8) over the opening region (6) for opening and closing the opening region (6),
- configuring the shape of the opening region (6) and of the flap (8) respectively in such a way that it is suitable for forming air eddies at edges (4) of the opening region (6) when the ambient air (3) flows through the air inlet valve (2),
wherein the flap (8) is fastened, upstream from the aircraft fuselage, to a first transverse side (10) of the side frame (16) which is laid transversely with respect to the fuselage longitudinal axis (12), which is mounted rotatably in the region of the fastening point,
wherein an auxiliary flap (26), the rotatably mounted flap edge of which is arranged on the longitudinal side region, facing the opening region (6), of the transverse side (11), is fastened to a second transverse side (11),
the flap face of the auxiliary flap (26), which makes it possible for additional ambient air (3) to pass into the opening region (6) in the pivoted-out position thereof, being pivotable towards the fuselage outer region until outside the opening region (6).

## Revendications

1. Vanne d'admission d'air (2) pour un aéronef (1), comportant :
- une zone d'ouverture (6) pour l'admission de l'air ambiant (3) dans l'espace intérieur du fuselage (7) de l'aéronef,
- un volet (8) pour ouvrir et fermer la zone d'ouverture (6), la zone d'ouverture (6) et le volet (8) présentant chacun une forme adaptée pour que, lors d'un flux de l'air ambiant (3) à travers la vanne d'admission d'air (2), des turbulences se forment sur les arêtes (4) de la zone d'ouverture (6),
le volet (8) étant fixé en amont du fuselage de l'aéronef sur une première traverse (10) du cadre latéral (16), qui est disposée perpendiculaire à l'axe longitudinal du fuselage (12), qui est monté mobile en rotation dans la zone du point de fixation, un volet auxiliaire (26) étant fixé sur une seconde traverse (11), dont le bord de volet monté mobile en rotation est disposé sur la zone de face longitudinale de la traverse (11) orientée vers la zone d'ouverture (6), la surface de volet du volet auxiliaire (26) pouvant pivoter jusqu'en dehors de la zone d'ouverture (6) dans la direction de la zone extérieure du fuselage, avec laquelle de l'air ambiant (3) supplémentaire se fait guider dans la zone d'ouverture (6) dans sa position pivotée vers l'extérieur.

2. Vanne d'admission d'air selon la revendication 1, **caractérisée par le fait que** la vanne d'admission d'air (2) est positionnée dans la zone d'admission d'air descendant NACA (18), avec laquelle une compensation de la pression d'air est créée en cas d'une pression différentielle (Δp) à effet inverse entre une zone intérieure du fuselage (7) d'un fuselage d'aéronef, qui est appliquée par une pression de l'air intérieur (pᵢ), et une zone d'arrivée d'air descendant NACA inclinée longitudinalement dans la direction aval du fuselage d'aéronef, qui est disposée à l'intérieur d'une enveloppe extérieure du fuselage (15) enveloppant le fuselage d'aéronef et qui est en communication de circulation d'air avec la zone intérieure du fuselage (7), une pression de l'air ambiant (pₐ) pesant sur une zone d'ouverture (6) de l'admission d'air descendant NACA (18) côté admission de la zone d'arrivée d'air descendant NACA, qui est délimitée par un cadre latéral (16) et recouverte par le volet (8) se trouvant en position de repos, le volet (8) fermant la zone d'ouverture (6), dans la mesure où la pression de l'air ambiant (pₐ) est supérieure à la pression de l'air intérieur (pᵢ).

3. Vanne d'admission d'air selon la revendication 1, **caractérisée par le fait que** le point de fixation peut se déplacer en fonction des rapports de force agissant sous charge de pression d'air sur elle par rapport à la zone d'ouverture (6) reliée à la zone intérieure du fuselage (7) côté sortie de la zone d'arrivée d'air descendant NACA.

4. Vanne d'admission d'air selon la revendication 3, **caractérisée par le fait qu'**une fonction de vanne d'admission d'air à flux optimisé et auto-régulatrice peut être mise en oeuvre au moyen de la zone d'ouverture (6) en utilisant les turbulences (5) apparaissant sur les arêtes des découpes côté rampe de la zone d'admission d'air descendant NACA (18) de l'air extérieur affluant partiellement dans la zone d'arrivée d'air descendant NACA, qui se poursuivent côté bord des arêtes du volet (8).

5. Vanne d'admission d'air selon au moins l'une quelconque des revendications précédentes, **caractérisée par le fait que** la vanne d'admission d'air (2) se présente sous la forme d'une vanne d'admission d'air (2) autonome.

6. Vanne d'admission d'air selon au moins l'une quelconque des revendications précédentes, **caractérisée par le fait que** la zone d'ouverture (6) de la zone d'admission d'air descendant NACA (18) du volet (8) le recouvrant en position de repos, quand la pression de l'air intérieur (pᵢ) est supérieure ou égale à la pression de l'air ambiant (pₐ), est étanche aux gaz, sinon, en cas de sous-pression de l'air du fuselage par rapport à la pression de l'air ambiant (pₐ), la zone d'ouverture (6) de l'admission d'air descendant (1) est rendue perméable au flux d'air par le volet (8) incliné vers la zone intérieure du fuselage (7) quand la pression de l'air intérieur (pᵢ) est inférieure à la pression de l'air ambiant (pₐ), une compensation de la pression de l'air étant réalisée par rapport à la zone intérieure du fuselage (7) dans cette situation.

7. Vanne d'admission d'air selon au moins l'une quelconque des revendications précédentes, **caractérisée par le fait que** le cadre latéral (16) comprend, outre la première traverse (10), une seconde traverse (11), et des côtés longitudinaux (13, 14) reliés aux extrémités des deux traverses (10, 11), une seconde traverse (11), se trouvant en amont du fuselage d'aéronef, étant disposée en regard de la première traverse (10) qui est située perpendiculaire à l'axe longitudinal du fuselage (12), qui est situé adjacent à une section (91) côté bord arrière de l'admission d'air descendant NACA (18), en outre un premier côté longitudinal (13) et un second côté longitudinal (14) sont disposés adjacents à la section (92, 93) côté bord d'arête de l'admission d'air descendant NACA (18), dont la zone de bord latéral est reliée mécaniquement à la traverse correspondante (10, 11) située à gauche et à droite, le tracé des deux côtés longitudinaux (13, 14) correspondant à celui de l'axe longitudinal du fuselage, le cadre latéral (16) formé des traverses et des côtés longitudinaux (10, 11, 13, 14) étant en outre fixé mécaniquement sur le côté de la zone d'ouverture (6) de l'admission d'air descendant (1) sur l'enveloppe extérieure du fuselage (15), les traverses et les côtés longitudinaux (10, 11, 13, 14), qui ont la forme d'éléments en plaque ou d'éléments porteurs plats à surface plane, étant disposés à l'extérieur de la zone d'ouverture (6) de l'admission d'air descendant (1) ou recouvrant légèrement celle-ci côté bord, dont le contour est adapté au tracé du contour de l'enveloppe extérieure du fuselage (15), qui comprennent la section de la zone d'ouverture (6) de l'admission d'air descendant (1).

8. Vanne d'admission d'air selon au moins l'une quelconque des revendications précédentes, **caractérisée par le fait que** le volet (3) au repos, qui est disposé dans cet état dans une position recouvrant la zone d'ouverture (6) de la zone d'admission d'air descendant NACA (18), est positionné pour appuyer contre une garniture d'étanchéité (17) en forme de bande orientée vers l'ouverture d'admission d'air descendant, qui est fixée en appui contre la section latérale orientée vers la zone intérieure du fuselage (7) des traverses et des côtés longitudinaux (10, 11, 13, 14), et également étanchéifier totalement contre un flux d'air extérieur entourant le fuselage, le volet (8) se trouvant en position de repos, qui obture une canalisation d'arrivée inclinée longitudinalement de la zone d'admission d'air descendant NACA (18), étant disposé en plan par rapport à la surface de l'enveloppe extérieure du fuselage (15).

9. Vanne d'admission d'air selon au moins l'une quelconque des revendications précédentes, **caractérisée par le fait que** les traverses et les côtés longitudinaux (10, 11, 13, 14) sont remplacés par des arêtes latérales de l'enveloppe extérieure du fuselage (15), qui sont positionnées sur le côté de l'ouverture d'admission d'air descendant.

10. Vanne d'admission d'air selon au moins l'une quelconque des revendications précédentes, **caractérisée par le fait qu'**au moins une charnière à ressort (19) est fixée sur la première traverse (10), une première section de charnière (20) étant fixée sur la première traverse (10) et une seconde section de charnière (21) montée mobile sur la première section de charnière (20) pouvant être déplacée par inclinaison dans la direction verticale vers le chanfrein de la surface de base de l'admission d'air descendant NACA (18), sur laquelle le volet (8) est fixé côté bord.

11. Vanne d'admission d'air selon au moins l'une quelconque des revendications précédentes, **caractérisée par le fait que** plusieurs charnières à ressort (19) disposées perpendiculaires à l'axe longitudinal du fuselage (12) et à distance entre elles sont fixées à la première traverse, la fixation du bord du volet (8) s'étendant perpendiculairement à l'axe longitudinal du fuselage (12) avec une largeur plus faible à deux charnières à ressort (19) étant suffisante.

12. Vanne d'admission d'air selon au moins l'une quelconque des revendications précédentes, **caractérisée par le fait qu'**un écart d'angle de charnière, inclus par la seconde section de charnière (21) se trouvant dans une position articulée à ouverture verticale par rapport à la première section de charnière (20), est limité par le débattement d'au moins un ressort de rappel, dont l'extrémité de ressort concernée est fixée à la section de charnière (20, 21) individuelle.

13. Vanne d'admission d'air selon au moins l'une quelconque des revendications précédentes, **caractérisée par le fait qu'**au moins un ressort de rappel ayant la forme d'un ressort de traction est fixé à la charnière à ressort (19) individuelle, grâce à quoi le volet (8) se trouvant en position verticale inclinée à la suite de la survenue de manière réduite d'un flux d'air ambiant est ramené de manière autorégulée sous l'effet de rappel de ressort dans une position inclinée vers la position de fermeture du volet ou sa position approchante dans la zone d'ouverture (6), dans la mesure où la pression d'air intérieur (pᵢ) augmente et s'approche de la pression d'air ambiant (pₐ), le volet (8) étant autrement également ramené de manière autorégulée jusque dans sa position de repos sous l'effet de rappel de ressort à la suite de la survenue et de la chute d'un flux d'air ambiant dans la zone d'ouverture (6), dont la réduction quantitative de flux diminue jusqu'à la l'arrêt de ce flux d'air dans la zone d'ouverture (6), dans la mesure où la pression de l'air intérieur (pᵢ) atteint une croissance qui est supérieure ou égale à la pression de l'air ambiant (pₐ).

14. Vanne d'admission d'air selon la revendication 1, **caractérisée par le fait que** les évidements (25) du volet (8) sont adaptés à la section du volet auxiliaire (26) en position non pivotée.

15. Procédé de fabrication d'une vanne d'admission d'air (2) pour un aéronef, comprenant les étapes suivantes :
- la mise à disposition d'une zone d'ouverture (6) pour l'admission de l'air ambiant (3) dans l'espace intérieur du fuselage (7) de l'aéronef,
- la disposition d'un volet (8) au-dessus de la zone d'ouverture (6) pour ouvrir et fermer la zone d'ouverture (6),
- la création de la forme de la zone d'ouverture (6) et du volet (8) de telle sorte que celle-ci est adaptée pour que, lors d'un flux de l'air ambiant (3) à travers la vanne d'admission d'air (2), des turbulences se forment sur les arêtes (4) de la zone d'ouverture (6),
le volet (8) étant fixé en amont du fuselage de l'aéronef sur une première traverse (10) du cadre latéral (16), qui est disposée perpendiculaire à l'axe longitudinal du fuselage (12), qui est monté mobile en rotation dans la zone du point de fixation,
un volet auxiliaire (26) étant fixé sur une seconde traverse (11), dont le bord de volet monté mobile en rotation est disposé sur la zone de face longitudinale de la traverse (11) orientée vers la zone d'ouverture (6), la surface de volet du volet auxiliaire (26) pouvant pivoter jusqu'en dehors de la zone d'ouverture (6) dans la direction de la zone extérieure du fuselage, avec laquelle de l'air ambiant (3) supplémentaire se fait guider dans la zone d'ouverture (6) dans sa position pivotée vers l'extérieur.
